# EUROPÄISCHE PATENTSCHRIFT

(11) **EP 2 157 322 B1**
(45) Veröffentlichungstag und Bekanntmachung des Hinweises auf die Patenterteilung: **04.05.2011**
(21) Anmeldenummer: 09165765.0
(22) Anmeldetag: 17.07.2009
(51) Int. Cl.: F16B 19/00

(54) **Verfahren zum Festlegen eines Befestigungselements an einem Stahlelement**
Method for attaching a fixing element to a steel element
Procédé de fixation d'un élément de fixation sur un élément d'acier

(30) Priorität: 21.08.2008 DE 102008041409
(43) Veröffentlichungstag der Anmeldung: 24.02.2010
(73) Patentinhaber: HILTI Aktiengesellschaft, 9494 Schaan (LI)
(72) Erfinder: Buhri, Reinhard, 6820 Frastanz (AT); Odoni, Walter, 9498 Planken (AT)

(56) Entgegenhaltungen:
- DE-U1- 20 209 675
- GB-A- 1 162 596

## Beschreibung

Die vorliegende Erfindung betrifft ein Verfahren zum Festlegen eines Befestigungselements an einem Stahlelement der im Oberbegriff von Patentanspruch 1 genannten Art.

Bei derartigen Verfahren ist es aus der DE 202 09 675 U1 bekannt ein Befestigungselement mit stumpfer Spitze in ein vorgebohrtes Sackloch in einem Untergrund einzutreiben.

Das Eintreiben des Befestigungselements in ein vorgebohrtes Sackloch, z. B. in einer Stahlplatte bzw. einem Stahlelement, hat den Vorteil, dass die Rückseite der Stahlplatte intakt bleibt. Damit bei der Anwendung dieses Verfahrens an Stahlblechen eine zuverlässige Verankerung erreicht wird, muss die Stahlkonstruktion bzw. das Stahlblech eine Mindestdicke aufweisen. Eine zuverlässige Verankerung von Befestigungselementen an dünnen Stahlblechen bzw. Stahlelementen ist mit dem bekannten Verfahren nicht möglich.

Die Aufgabe der vorliegenden Erfindung liegt darin ein Verfahren bereitzustellen, das auch eine zuverlässige Verankerung eines Befestigungselements an einer Stahlkonstruktion mit einer kleinen Stahl- bzw. Schichtdicke erlaubt.

Die Aufgabe wird durch das in Patentanspruch 1 wiedergegebene Verfahren gelöst. Demnach wird in einem ersten Schritt des Verfahrens zunächst eine Metallscheibe auf das Stahlelement aufgeklebt. In einem nachfolgenden zweiten Schritt wird ein Sackloch in den Stapel aus Metallscheibe und Stahlelement vorgebohrt und in einem nachfolgenden dritten Schritt wird das Befestigungselement mittels eines handgeführten Eintreibgeräts in das vorgebohrte Sackloch im Stapel eingetrieben. Durch die lokale Verdickung des Stahlelements mittels der aufgeklebten Metallscheibe wird beim Eintreiben des Befestigungselements in das Sackloch genügend Reibungswärme erzeugt, um einen Befestigungsabschnitt des Schaftes des Befestigungselements im Sackloch mit dem Stahlelement stoffschlüssig zu verbinden bzw. zu verschweissen auch wenn das Stahlelement bzw. das Stahlblech eine an sich zu geringe Dicke aufweist.

Vorteilhaft ist das zu verwendende Befestigungselement ein Bolzen, insbesondere ein Gewindebolzen, mit einer stumpfen Spitze. Hierdurch wird eine Beschädigung des Sacklochbodens und damit der der Metallscheibe abgewandten Rückseite des Stahlelements ausgeschlossen.

Günstig ist es ferner, wenn die Gesamtdicke des Stapels aus Stahlelement und Metallscheibe wenigstens 8 mm beträgt, wodurch eine ausreichende Reibungswärme beim Eintreiben eines Befestigungselements in das Sackloch im Stapel entsteht.

In den Zeichnungen ist die Erfindung in einem Ausführungsbeispiel dargestellt.

Es zeigen:
- Fig. 1: einen ersten Schritt des erfindungsgemässen Verfahrens,
- Fig. 2: einen zweiten Schritt des erfindungsgemässen Verfahrens,
- Fig. 3: einen dritten Schritt des erfindungsgemässen Verfahrens,
- Fig. 4: ein in einem Stahlelement mittels des erfindungsgemässen Verfahrens verankertes Befestigungselement.

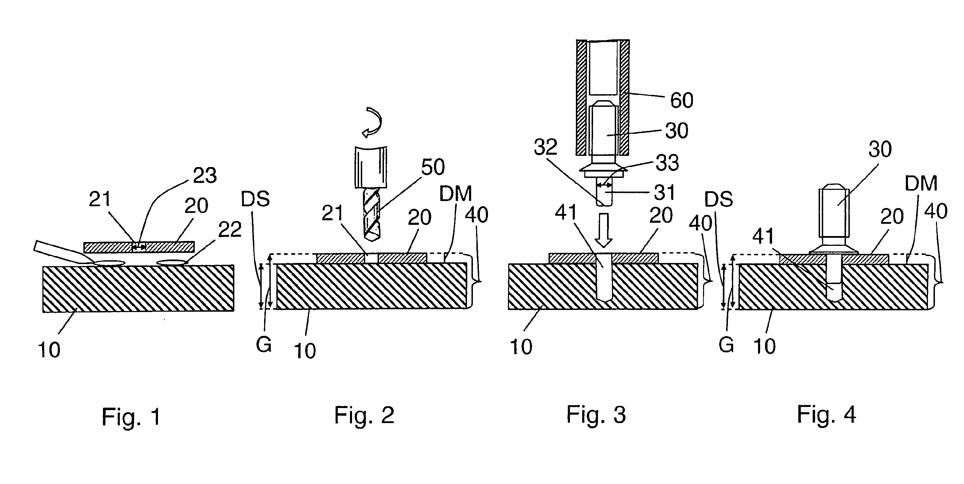

In den Figuren 1 bis 4 ist ein erfindungsgemässes Verfahren wiedergegeben. Wie aus Fig. 1 ersichtlich wird bei dem erfindungsgemässen Verfahren in einem ersten Schritt zunächst eine Metallscheibe 20 auf ein flächiges Stahlelement 10, wie z. B. ein oder mehrere Stahlbleche, aufgeklebt. Der Klebstoff 22 kann dabei wie dargestellt auf die Klebestelle aufgetragen werden oder die Metallscheibe 20 ist bereits mit einer klebenden Beschichtung ausgerüstet. In einem aus Fig. 2 ersichtlichen zweiten Schritt wird in den Stapel 40 aus Stahlelement 10 und Metallscheibe 20 mittels eines Bohrers 50 ein Sackloch 41 gebohrt. In einem aus Fig. 3 ersichtlichen dritten Schritt wird mittels eines handgeführten Eintreibgerätes 60 (in Figur 3 ist nur die Mündung des Eintreibgerätes dargestellt), wie z. B. eines mittels Brennkraft oder elektrisch betriebenen Eintreibgeräts, ein Befestigungselement 30, insbesondere ein Gewindebolzen, mit vorzugsweise stumpfer, d. h. abgeflachter Spitze, in das Sackloch 41 eingetrieben. Die Gesamtdicke G des Stapels 40 aus Metallscheibe 20 und Stahlelement 10 beträgt dabei wenigstens 8 mm. Die Dicke DM der aufgeklebten Metallscheibe 20 wird dazu entsprechend der vorgegebenen Dicke DS des Stahlelements 10 gewählt. Durch die lokale Verdickung des Stahlelements 10 mittels der aufgeklebten Metallscheibe 20 wird beim Eintreiben des Befestigungselements 30 in das Sackloch 41 genügend Reibungswärme erzeugt, um einen Befestigungsabschnitt 31 des Schaftes des Befestigungselements 30 im Sackloch 41 mit dem Stahlelement 10 stoffschlüssig zu verbinden bzw. zu verschweissen. Es wird dadurch eine zuverlässige Verankerung erzielt. Die Metallscheibe 20 ist dabei vorzugsweise aus einem korrosionsbeständigen Stahl. Die Metallscheibe 20 kann eine Durchgangsöffnung 21 besitzen, deren Durchmesser 23 zwischen 25% und 85% des Schaftdurchmessers 33 des Befestigungsabschnitts 31 entspricht. Die Durchgangsöffnung 21 erleichtert dabei die Zentrierung des Bohrers 50 beim Anbohren des Stahlelements 10.

## Patentansprüche

1. Verfahren zum Festlegen eines Befestigungselements an einem flächigen Stahlelement (10), bei dem das Befestigungselement (30) in ein vorgebohrtes Sackloch (41) in dem Stahlelement (10) eingetrieben wird,
**dadurch gekennzeichnet,**
**dass**
- in einem ersten Schritt eine Metallscheibe (20) auf das Stahlelement (10) aufgeklebt wird,
- in einem nachfolgenden zweiten Schritt ein Sackloch (41) in den Stapel (40) aus Metallscheibe (20) und Stahlelement (10) vorgebohrt wird,
- in einem nachfolgenden dritten Schritt das Befestigungselement (30) mittels eines handgeführten Eintreibgeräts (60) in das vorgebohrte Sackloch (41) im Stapel (40) eingetrieben wird.

2. Verfahren nach Anspruch 1, **dadurch gekennzeichnet, dass** das verwendete Befestigungselement (30) ein Bolzen mit einer stumpfen Spitze (32) ist.

3. Verfahren nach Anspruch 1 oder 2, **dadurch gekennzeichnet, dass** die Gesamtdicke (G) des Stapels (40) aus Stahlelement (10) und Metallscheibe (20) wenigstens 8 mm beträgt.

## Claims

1. Method of fixing a fastening member to a planar steel member (10), in which the fastening member (30) is driven into a pre-drilled blind hole (41) in the steel member (10), **characterised in that**
- in a first step, a metal disc (20) is adhesive-bonded to the steel member (10),
- in a subsequent second step, a blind hole (41) is pre-drilled in the stack (40) comprising the metal disc (20) and the steel member (10),
- in a subsequent third step, the fastening member (30) is driven into the pre-drilled blind hole (41) in the stack (40) by means of a hand-held driving device (60).

2. Method according to claim 1, **characterised in that** the fastening member (30) used is a pin having a blunt tip (32).

3. Method according to claim 1 or 2, **characterised in that** the total thickness (G) of the stack (40) comprising the steel member (10) and the metal disc (20) is at least 8 mm.

## Revendications

1. Procédé pour ancrer un élément de fixation à un élément en acier plat (10), dans lequel l'élément de fixation (30) est enfoncé dans un trou borgne (41) préalablement percé dans l'élément en acier (10),
**caractérisé en ce que** :
- lors d'une première étape, une rondelle métallique (20) est collée sur l'élément en acier (10),
- lors d'une deuxième étape suivante, un trou borgne (41) est préalablement percé dans l'empilement (40) formé de la rondelle métallique (20) et de l'élément en acier (10),
- lors d'une troisième étape suivante, l'élément de fixation (30) est enfoncé au moyen d'un appareil d'enfoncement tenu à la main (60) dans le trou borgne (41) préalablement percé dans l'empilement (40).

2. Procédé selon la revendication 1, **caractérisé en ce que** l'élément de fixation (30) utilisé est un goujon ayant un embout arrondi (32).

3. Procédé selon la revendication 1 ou 2, **caractérisé en ce que** l'épaisseur totale (G) de l'empilement (40) formé de l'élément en acier (10) et de la rondelle métallique (20) est d'au moins 8 mm.
